# EUROPEAN PATENT SPECIFICATION

(11) **EP 2 138 392 B1**
(45) Date of publication and mention of the grant of the patent: **23.02.2011**
(21) Application number: 09251657.4
(22) Date of filing: 26.06.2009
(51) Int. Cl.: B62J 17/02, B62J 6/00

(54) **Motorcycle with a flasher unit**
Motorrad mit einer Blinkereinheit
Motocyclette avec une unité de clignotants

(30) Priority: 27.06.2008 JP 2008168664
(43) Date of publication of application: 30.12.2009
(73) Proprietor: Yamaha Hatsudoki Kabushiki Kaisha, Shizuoka-ken Shizuoka 438-8501 (JP)
(72) Inventor: Ogata, Tomokazu, Iwata-shi, Shizuoka-ken 438-8501 (JP); Tanemo, Hideo, Iwata-shi, Shizuoka-ken 438-8501 (JP)
(74) Representative: Grünecker, Kinkeldey, Stockmair & Schwanhäusser Anwaltssozietät

(56) References cited:
- EP-A- 1 780 104
- JP-A- 11 020 761
- JP-A- 2006 335 198
- US-A1- 2006 056 191

## Description

### Technical Field

The present invention relates to a motorcycle.

### Background Art

Some motorcycles are provided with a flasher unit formed by the integration of a headlamp and flashers (see Japan Patent Laid-open Patent Publication JP-A-2007-283927). The flasher unit is attached to an upper cover section of a front cover. In this case, a headlamp is disposed between a pair of the flashers. The upper cover section is a part of the front cover, disposed above a front wheel.

According to the aforementioned motorcycle, the headlamp and the flashers are integrated. With the structure, it is possible to reduce the number of components required for the flasher unit.

On the other hand, the headlamp is provided with a reflector for reflecting light irradiated by bulbs. The reflector bulges out in a rearwardly convex shape. Accordingly, a rear side of the conventional flasher unit rearwardly protrudes in a convex shape. Moreover, a relatively large reflector is required for the headlamp in order to supply the sufficient amount of light. Therefore, a part of the interior space of the upper cover portion, positioned rearward of the flasher unit, will be accordingly reduced. Thus, the space for accommodating e.g., internal components will be reduced.

Also, a vertical dimension of the upper cover section is smaller in a motorcycle provided with a front wheel of a large outer diameter than a motorcycle provided with a front wheel of a small outer diameter. In this case, the accommodation space in the upper cover portion will be accordingly reduced. The accommodation space in the upper cover portion occupies a large part of the entire accommodation space in the front cover. As described above, when the accommodation space in the upper cover portion is reduced, the entire accommodation space in the front cover will be limited. Thus, limitation of the accommodation space in the front cover is greater in the type of motorcycle provided with a front wheel of a large diameter than in the type of motorcycle provided with a front wheel of a small diameter. This is largely influenced by the reduced space positioned rearward of the flasher unit.

US-A-2006/0056191 discloses a motorcycle having a headlight mounted in a cover member attached to the handlebars. Two turn signals are mounted in a cover member which is attached to the head pipe and are separate from each other. The headlight is at a different height to the turn signals.

JP-2006-335198 discloses a four-wheel all-terrain vehicle. Right and left headlight housings are connected and fixed by a bridge part to form a headlight unit. The bridge part has a wall with a linear rear edge. A front edge of the bridge part is generally convex in the forward direction of the vehicle. A module containing an air duct grill is fitted over the front of the headlight unit.

An object of the present invention is to reduce the number of components of a flasher unit and simultaneously sufficiently keep an accommodation space in the interior of a front cover, especially a space positioned rearward of the flasher unit, in a motorcycle of a large wheel diameter.

### Summary

A motorcycle according to the present invention is provided with front and rear wheels, a front cover, a flasher unit and a headlamp. The front cover includes an upper cover portion and a lower cover portion. The upper cover portion is positioned forward of a head pipe while positioned above the front wheel. The lower cover portion extends downward from the upper cover portion. The lower cover portion is positioned rearward of the front wheel. A vertical dimension of the upper cover portion is less than that of the lower cover portion in a front view. The flasher unit includes a pair of right and left flashers and a coupling member. The flasher unit is attached to the upper cover portion. The coupling member connects the flashers. A rear side of the coupling member is formed in a linear shape or a forwardly concave shape in a plan view. The headlamp is disposed at a different height from the coupling member. The upper cover section has a front opening and the flasher unit is positioned in the front opening. The shape of the front opening matches the shape of a lens of the right flasher, a lens of the left flasher and a front surface of the coupling member.

According to the motorcycle of the present invention, the flasher unit has a structure that the flashers are coupled to each other by the coupling member. The structure makes it possible to reduce the number of components of the flasher unit. Additionally, the headlamp is separately provided from the flasher unit. The headlamp is disposed at a different height from the coupling member. Moreover, the rear side of the coupling member is formed in a linear shape or a forwardly concave shape in a plan view. The structure makes it possible to sufficiently keep a large accommodation space, positioned rearward of the flasher unit, in the interior of the front cover.

### Brief Description of the Drawings

Embodiments of the invention are described below, by way of example only, with reference to the drawings.
Figure 1 is a side view of a motorcycle.
Figure 2 is a front view of a front part of the motorcycle.
Figure 3 is a top view of the front part of the motorcycle.
Figure 4 is a perspective view of a flasher unit.
Figure 5 is a front view of the flasher unit.
Figure 6 is a top view of the flasher unit.
Figure 7 is a front view of a housing of the flasher unit.
Figure 8 is a front view of an upper component of a front cover.
Figure 9 is a side view of the upper component of the front cover.
Figure 10 is a front view of a lower component of the front cover.
Figure 11 is a cross-sectional view of the motorcycle (Fig. 1), sectioned along a line X-X.
Figure 12 is a diagram for comparing an accommodation space in a motorcycle having a large wheel diameter and that in a motorcycle having a small wheel diameter.
Figure 13 is a front view of a flasher unit according to another embodiment.
Figure 14 is a front view of a flasher unit according to yet another embodiment.
Figure 15 is a top view of a flasher unit according to another embodiment.
Figure 16 is a side view of a motorcycle according to another embodiment.
Figure 17 is a side view of a front part of the motorcycle according to another embodiment.

While the invention is susceptible to various modifications and alternative forms, specific embodiments are shown by way of example in the drawings and are herein described in detail. It should be understood, however, that the drawings and detailed description are not intended to limit the invention as defined in the appended claims.

### Detailed Description

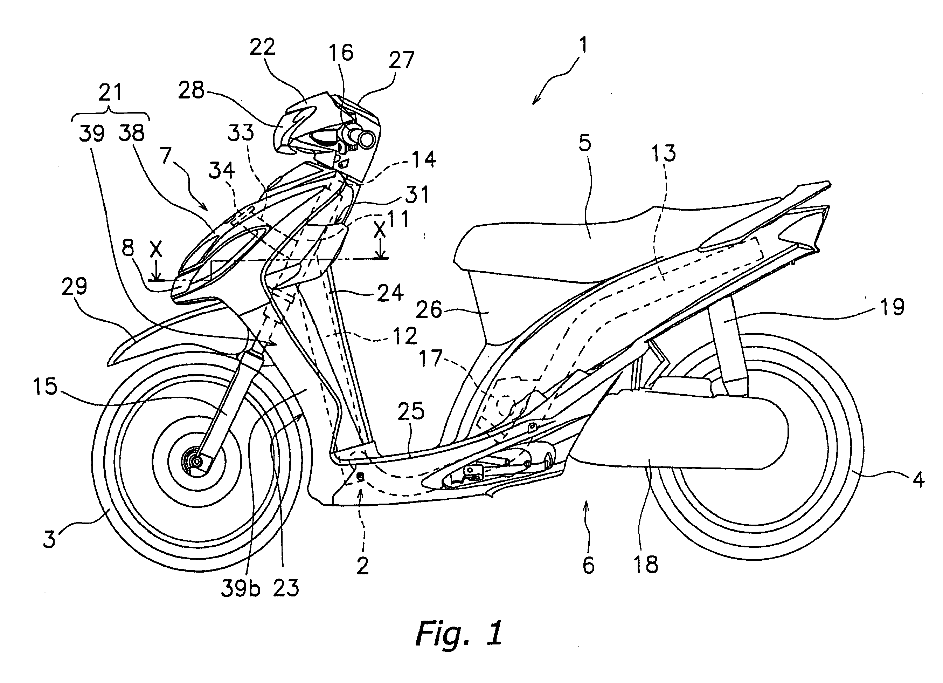

Figure 1 illustrates a motorcycle 1 according to an embodiment of the present invention. Figure 1 is a side view of the motorcycle 1. Note terms "right" and "left" hereinafter means directions seen from a rider seated on a seat 5.

### 1. Entire Structure

The motorcycle 1 is a scooter-type motorcycle. The motorcycle 1 is provided with a main body frame 2, a front wheel 3, a rear wheel 4, the seat 5, a power unit 6 and a cover member 7.

The main body frame 2 includes a head pipe 11, a main frame 12 and a pair of right and left side frames 13. Note Fig. 1 illustrates only either of the pair of side frames 13.

A steering shaft 14 is inserted into the head pipe 11. The steering shaft 14 is rotatably supported by the head pipe 11. Front forks 15 are attached to the lower end of the steering shaft 14. The front wheel 3 is supported by a shaft attached to the lower end of the front forks 15. Additionally, a steering handle 16 is fixed to the upper end of the steering shaft 14.

The main frame 12 is connected to the head pipe 11. The main frame 12 extends rearward from the head pipe 11 in an.obliquely downward direction.

The pair of side frames 13 is connected to the bottom part of the main frame 12. The pair of side frames 13 extends rearward from the main frame 12 in an obliquely upward direction. The seat 5 is disposed above the pair of side frames 13.

The power unit 6 is supported by the pair of side frames 13. The power unit 6 includes an engine 17 and a transmitter 18. The transmitter 18 is configured to transmit power of the engine 17 to the rear wheel 4. The rear wheel 4 is supported by a shaft at a rear end of the transmitter 18. Additionally, a rear cushion unit 19 is disposed between the transmitter 18 and the pair of side frames 13.

Note a wheel diameter of the front and rear wheels 3 and 4 is greater than a vertical dimension of an upper cover section 38 of a front cover 21 to be described. The outer wheel diameter of the front and rear wheels 3 and 4 is 0.356 m (14 inches).

The cover member 7 is made of resin, and covers the main body frame 2 and the steering handle 16. The cover member 7 mainly includes the front cover 21, a handle cover 22, a leg shield 24, a foot board 25 and a side cover 26.

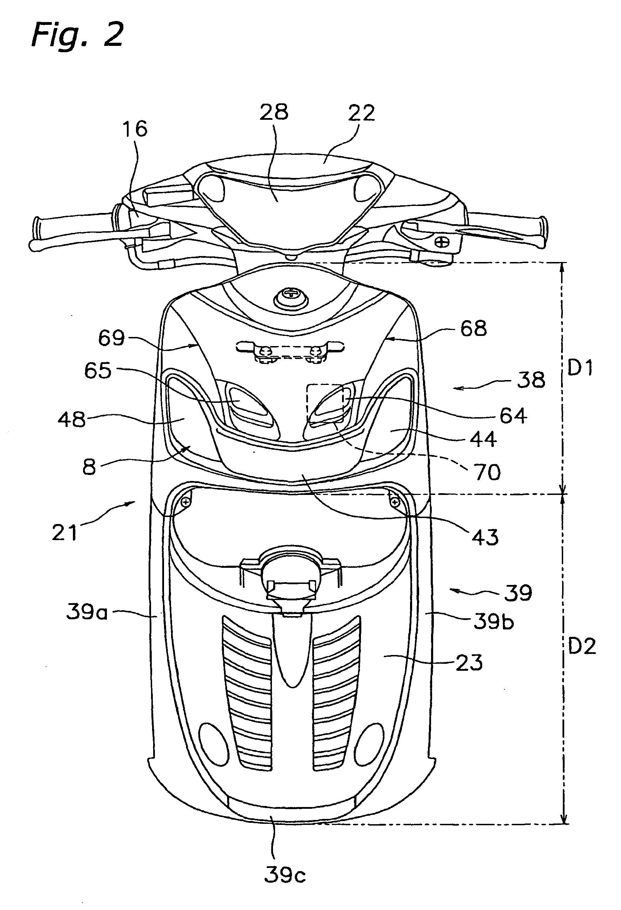

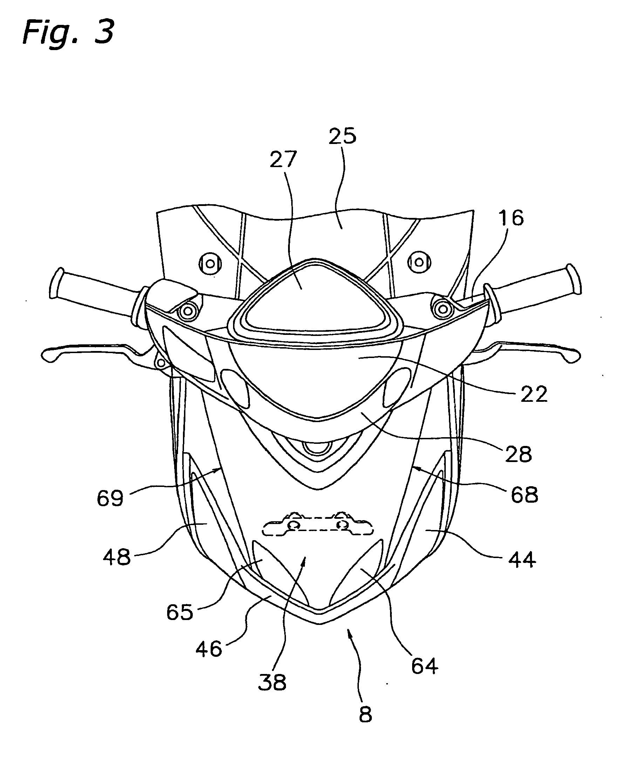

The front cover 21 includes the upper cover section 38 and a lower cover section 39. The upper cover section 38 is disposed forward of the head pipe 11. The lower cover section 39 is disposed below the upper cover section 38. The upper cover section 38 is disposed above the front wheel 3. As illustrated in Figs. 2 and 3, a flasher unit 8 is attached to the upper cover section 38. The lower cover section 39 extends downward from the upper cover section 38. The lower cover section 39 is positioned rearward of the front wheel 3. The lower cover section 39 includes a pair of right and left cover portions (i.e., a right-side lower cover portion 39a and a left-side lower cover portion 39b), an inner fender 23 and a bottom portion 39c. The right-side lower cover portion 39a and the left-side lower cover portion 39b are disposed away from each other in the transverse direction of the motorcycle 1. The front wheel 3 is disposed between the right-side cover portion 39a and the left-side cover portion 39b in a front view of the motorcycle 1. The right-side lower cover portion 39a extends from the upper cover section 38 in an obliquely rearward direction. The right-side lower cover portion 39a is positioned rearward of the front wheel 3. Similarly to the right-side lower cover portion 39a, the left-side lower cover portion 39b extends from the upper cover section 38 in an obliquely rearward direction. The left-side lower cover portion 39b is positioned rearward of the front wheel 3. The bottom portion 39c couples lower ends of the right-side and left-side lower cover portions 39a and 39b. The inner fender 23 is disposed below the upper cover section 38 of the front cover 21. The inner fender 23 bends in a rearwardly convex shape. The inner fender 23 is disposed rearward of the front wheel 3. More specifically, the inner fender 23 bridges the right-side lower cover portion 39a and the left-side lower cover portion 39b while disposed between them. The inner fender 23 covers behind the front wheel 3. As illustrated in Fig. 1, a front fender 29 is disposed above the front wheel 3. The front fender 29 covers above the front wheel 3.

As described above, the outer wheel diameter of the front wheel 3 is large, and the vertical dimension of the lower cover section 39 is accordingly large. Therefore, as illustrated in Fig. 2, a vertical dimension D1 of the upper cover section 38 is less than a vertical dimension D2 of the lower cover section 39 in the front view of the motorcycle 1. Figure 2 is herein a front view of the front part of the motorcycle 1 whereas Fig. 3 is a top view of the front part of the motorcycle 1. Note some of the components of the motorcycle 1 (e.g., the front wheel 3 and the main body frame 2) are not illustrated in Figs. 2 and 3. The front cover 21 and the flasher unit 8 will be hereinafter explained in detail.

The handle cover 22 is disposed above the front cover 21, and covers the steering handle 16. A meter panel 27, including e.g., a fuel meter and a speed meter, is disposed on the top side of the handle cover 22. Additionally, a headlamp 28 is attached to the front side of the handle cover 22. The headlamp 28 is disposed above the front cover 21. The handle cover 22 is configured to turn with the steering handle 16. Accordingly, the headlamp 28 is also configured to turn with the steering handle 16. With the structure, the headlamp 28 is capable of appropriately irradiating light in a moving direction of the motorcycle 1.

The leg shield 24 is disposed rearward of the front cover 21. The leg shield 24 covers the back of the main frame 12. An inner pocket 31 is formed in a part of the leg shield 24, positioned rearward of the upper cover section 38. The inner pocket 31 is used as an accommodation part. The front part of the inner pocket 31 is disposed in the interior of the upper cover section 38. With the structure, the inner pocket 31 reliably has a large accommodation space.

The foot board 25 is a member on which a rider puts his/her feet. The foot board 25 is disposed forwardly below the seat 5. The foot board 25 is also disposed between the front wheel 3 and the rear wheel 3. The foot board 25 is connected to the lower end of the leg shield 24. The foot board 25 is formed in a transverse-directionally flat shape.

The side cover 26 is disposed rearward of the foot board 25. The side cover 26 encloses the periphery of the part positioned below the seat 25.

### 2 . Structure of the flasher unit 8

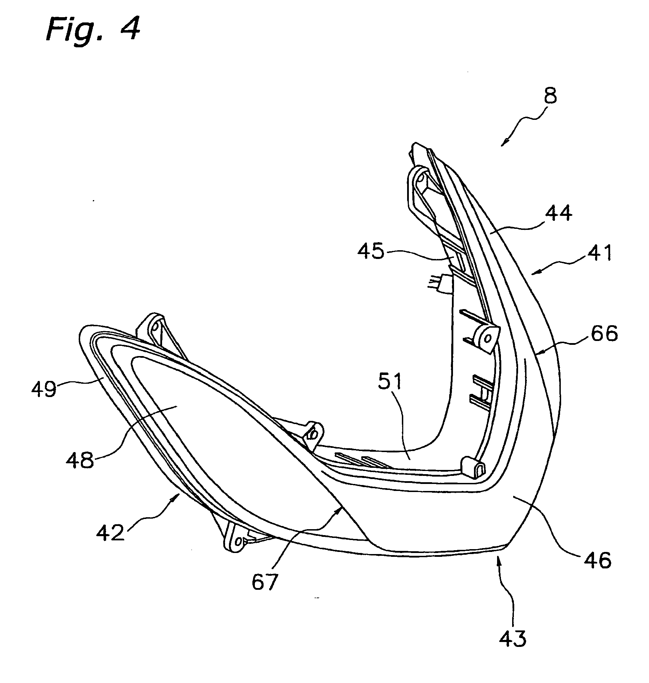

Next, structure of the flasher unit 8 will be hereinafter explained in detail. As illustrated in Figs. 4 to 6, the flasher unit 8 includes a pair of right and left flashers 41 and 42, and a coupling member 43. Note Figs. 4, 5 and 6 are a perspective view, a front view and a top view of the flasher unit 8, respectively. Figs. 4, 5 and 6 illustrate a posture of the flasher unit 8 being installed in the motorcycle 1. Note directional terms, including e.g., "up," "down," "right," "heft," "front" and "rear," mean directions of the flasher unit 8 installed in the motorcycle 1, respectively.

In the front view, the flashers 41 and 42 are horizontally symmetrically disposed. One of the flashers, positioned on the right side, will be hereinafter referred to as "a first flasher 41" whereas the other of the flashers, positioned on the left side, will be hereinafter referred to as "a second flasher 42." Each of the first and second flashers 41 and 42 outwardly extends from the bottom to the top. Thus, a distance between the first and second flashers 41 and 42 is greater in their upper portions than in their lower portions.

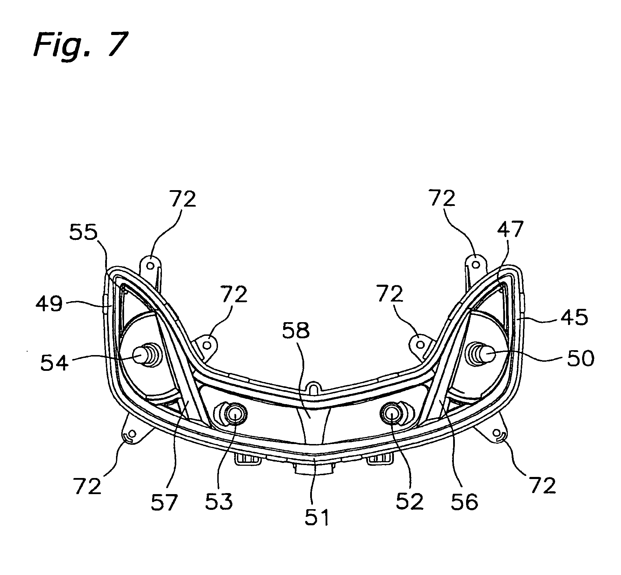

The first flasher 41 has a first lens 44, a first housing 45 and a first flasher bulb 50 (see Fig. 7).

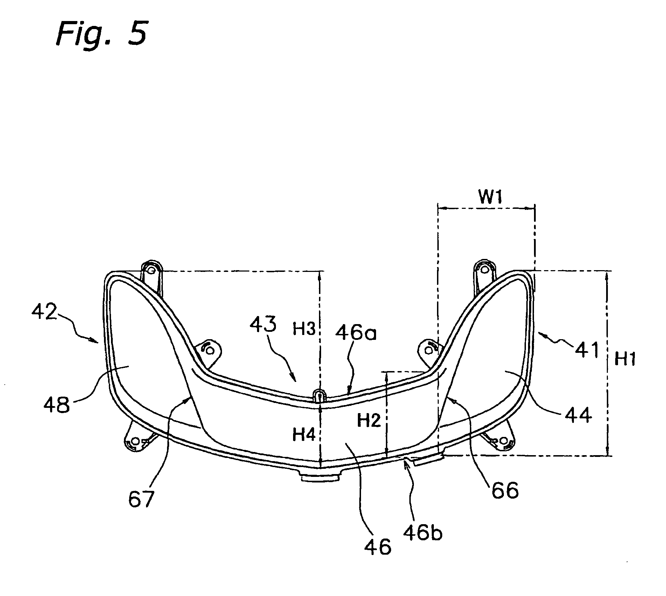

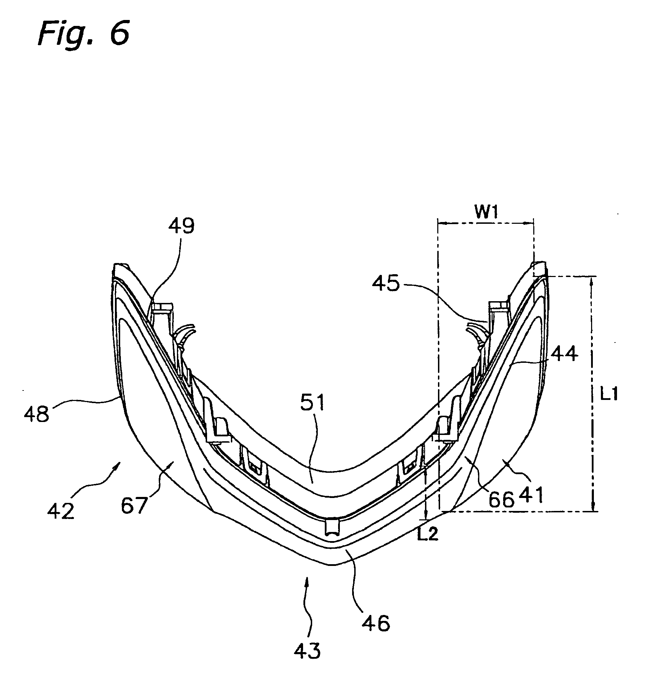

The first lens 44 is made of resin having translucency (e.g., transparent resin). The first lens 44 forms the front side of the first flasher 41. In the front view, the first lens 44 is further elongated in its vertical direction than in its transverse direction. In the top view, the first lens 44 is further elongated in its longitudinal direction than in its transverse direction. As illustrated in the front view of Fig. 5, a vertical dimension H1 of the first lens 44 is greater than a transverse-directional dimension W1 thereof. Additionally, as illustrated in the top view of Fig. 6, a longitudinal dimension L1 of the first lens 44 is greater than the transverse-directional dimension W1 thereof. Note the transverse-directional dimension of the first lens 44 herein means a transverse-directional length of a part positioned outside a boundary 66 appearing between the first lens 44 and a coupling lens 46 to be described, more specifically, a transverse-directional length from the innermost of the first lens 44 to the outermost thereof. Also, the boundary 66 is formed by a discontinuous part between the first lens 44 and the coupling lens 46. Specifically, the boundary 66 is formed by a convex portion protruding from a lens surface. On the other hand, the vertical dimension of the first lens 44 herein means a vertical length of a part positioned outside the boundary 66, more specifically, a vertical length from the uppermost of the first lens 44 to the lowermost thereof. The longitudinal dimension of the first lens 44 herein means a longitudinal length of a part positioned outside the boundary 66, more specifically; a longitudinal length from the foremost of the first lens 44 to the rearmost thereof.

Furthermore, in the front view, the first lens 44 protrudes further upward than an upper rim 46a of the coupling lens 46 to be described. The vertical dimension H1 of the first lens 44 is greater than the vertical dimension H2 of the coupling lens 46. In the top view, the first lens 44 protrudes further rearward than the coupling lens 46. In the top view, the longitudinal dimension L1 of the first lens 44 is greater than the longitudinal dimension L2 of the coupling lens 46. Note the vertical dimension H2 of the coupling lens 46 herein means a vertical length of a part positioned inward of the boundary 66, more specifically, a vertical length of a boundary part of the coupling lens 46 adjacent to the first lens 44. On the other hand, the longitudinal dimension L2 of the coupling lens 46 herein means a longitudinal length of a part positioned inward of the boundary 66, more specifically, a longitudinal length of a boundary part of the coupling lens 46 adjacent to the first lens 44.

The first housing 45 is made of resin, and its front side is covered with the first lens 44. As illustrated in Fig. 7, an outer shape of the first housing 45 is approximately the same as that of the first lens 44 in a front view. Figure 7 is a front view of the flasher unit 8 from which the lens plane is removed. Note an air vent port 47, penetrating through the first housing 45, is formed in an upper end of the first housing 45. The first flasher bulb 50 is attached to the first housing 45. The first flasher bulb 50 is accommodated in a space between the first housing 45 and the first lens 44.

As illustrated in Figs. 4 to 7, the second flasher 42 includes a second lens 48, a second housing 49 and a second flasher bulb 54. In the front view, the second flasher 42 is horizontally symmetrically formed with the first flasher 41. The second lens 48, the second housing 49 and the second flasher bulb 54 correspond to the first lens 44, the first housing 45 and the first flasher bulb 50, respectively. With the correspondence, a detailed explanation of the second lens 48, the second housing 49 and the second flasher bulb 54 will be hereinafter omitted. Note a boundary 67 appears between the second lens 48 and the coupling lens 46. As illustrated in Fig. 7, similarly to the first housing 45, an air vent port 55 is formed in the second housing 49.

The coupling member 43 couples the first flasher 41 and the second flasher 42. A transverse-directionally center part of the coupling member 43 bends in a downwardly convex shape. The coupling member 43 includes the coupling lens 46, a coupling housing 51 and a pair of positioning bulbs 52 and 53.

The coupling lens 46 is made of resin having transparency. The coupling lens 46 forms a front side of the coupling member 43. As illustrated in the front view of Fig. 5, the coupling lens 46 is further elongated in its transverse direction than in its vertical direction. The transverse-directionally center part of the coupling lens 46 bends in a downwardly convex shape. In the front view, a vertical dimension H3 is greater than a vertical dimension H4. Here, the vertical dimension H3 is a length from an upper end of each of the lenses 44 and 48 of the first and second flashers 41 and 42 to an upper end of the transverse-directionally center part of the coupling lens member 46. On the other hand, the vertical dimension H4 is a vertical length of the transverse-directionally center part of the coupling lens 46. The vertical dimension H4 of the transverse-directionally center part of the coupling lens 46 is less than the vertical dimension of the headlamp 28. Additionally, as illustrated in the top view of Fig. 6, the coupling lens 46 bends in a forwardly convex shape. Note the front end of the coupling lens 46 is positioned further forward than the front end of the upper cover section 38 of the front cover 21 (see Fig. 3).

The coupling housing 51 is made of resin, and its front side is covered with the coupling lens 46. The coupling housing 51 is accommodated in the upper cover section 38 when the flasher unit 8 is attached to the front cover 21. Additionally, in the front view, the outer shape of the coupling housing 51 is approximately the same as that of the coupling lens 46. As illustrated in the plan view of Fig. 6, the rear side of the coupling housing 51 bends in a forwardly concave shape. In the plan view, the rear side of the flasher unit 8 accordingly entirely bends in a forwardly concave shape.

As illustrated in Fig. 7, the pair of the positioning bulbs 52 and 53 is attached to the coupling housing 51. In the front view, the positioning bulbs 52 and 53 are disposed transverse-directionally away from each other. The positioning bulbs 52 and 53 are accommodated in a space between the coupling housing 51 and the coupling lens 46. Note the aforementioned first and second flasher bulbs 50 and 54 are disposed at a different height from the positioning bulbs 52 and 53. Specifically, in the front view, the first and second flasher bulbs 50 and 54 are disposed further upward than the positioning bulbs 52 and 53. Additionally, in the front view, the first and second flasher bulbs 50 and 54 are positioned further upward than the upper rim 46a of the coupling member 43 (see Fig. 5).

Note the aforementioned first lens 44, the second lens 48 and the coupling lens 46 are integrally formed without any seams. The first flasher 41, the second flasher 42 and the coupling member 43 have a shared integrated lens. Similarly, the aforementioned first housing 45, the second housing 49 and the coupling housing 51 are integrally formed without any seams. The first flasher 41, the second flasher 42 and the coupling member 43 have a shared integrated housing. As illustrated in Fig. 7, the front side of the housing is configured to reflect light from the flasher bulbs 50 and 54 and the positioning bulbs 52 and 53. For example, the front side of the housing is formed as a mirror finished plane. In the housing, the first housing 45 and the coupling housing 51 are partitioned by a first partition member 56, whereas the coupling housing 51 and the second housing 49 are partitioned by a second partition member 57. Additionally, the space in the coupling housing 51 is partitioned into right and left spaces by a third partition member 58. The positioning bulbs 52 and 53 are disposed in the left and right spaces, respectively. Note the housing is provided with a plurality of ribs 72. The ribs 72 are used for attaching the flasher unit 8 to the front cover 21.

### 3. Structure of the front cover 21

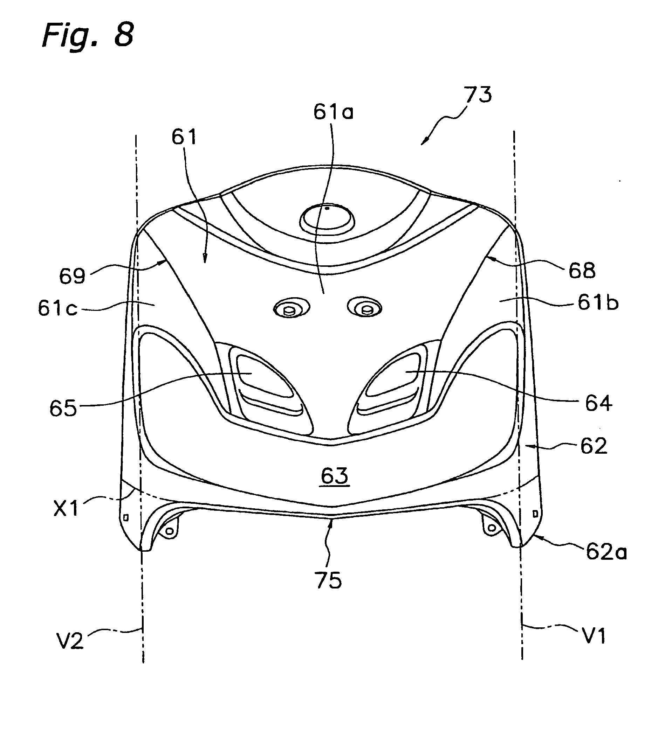

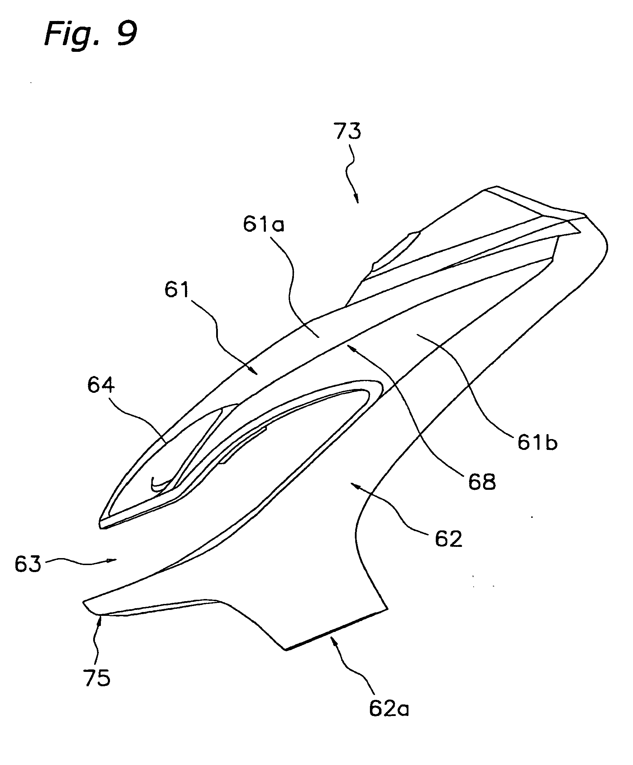

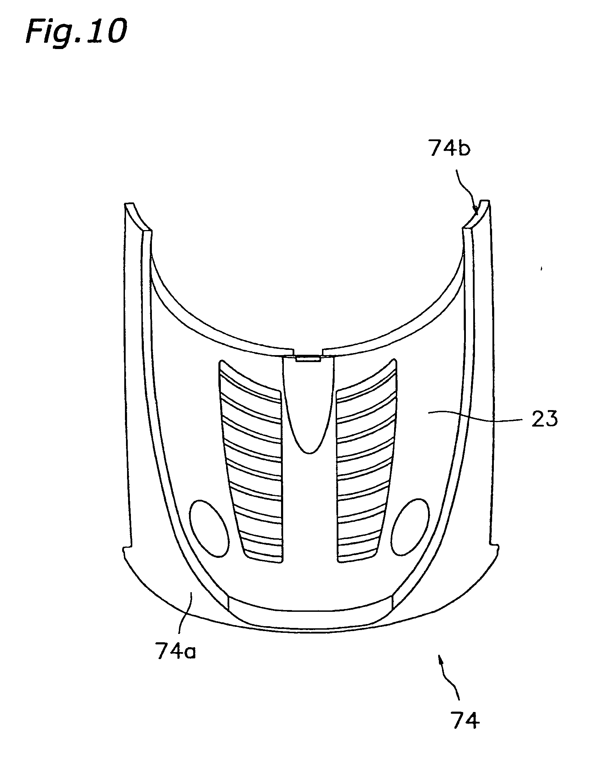

Next, structure of the front cover 21 will be hereinafter explained in detail. The front cover 21 is made of resin, and is formed by the combination of an upper component 73 and a lower component 74. The upper component 73 is illustrated in Figs. 8 and 9 whereas the lower component 74 is illustrated in Fig. 10.

The upper component 73 is integrally formed without any seams. The upper component 73 is three-dimensionally formed, and includes a front-side part 61 and lateral-side parts 62. Figure. 8 is a front view of the upper component 73 whereas Fig. 9 is a side view thereof. As illustrated in Fig. 9, the front-side part 61 forms a front side of the upper component 73. The front-side part 61 is disposed in a tilted state so that an upper end of the front-side part 61 is disposed rearward of a lower end thereof. The lower end of the upper component 73 is formed in an upwardly concave shape, and a recess 75 is accordingly formed. A part of the upper component 73, positioned above a rim of a center part of the recess 75 (see a part positioned above a dashed-dotted line X1 in Fig. 8), forms the aforementioned upper cover section 38. The lateral-side parts 62 form lateral sides of the front cover 21. Lower ends 62a of the lateral-side parts 62 abut to upper ends 74b of the lower component 74. An opening 63 is formed in the front-side part 61 of the upper component 73. The flasher unit 8 is attached to the opening 63. The shape of the opening 63 is matched with that of the aforementioned lenses of the flasher unit 8.

Additionally, a pair of apertures 64 and 65 is formed in the upper component 73. The apertures 64 and 65 are positioned between a pair of phantom perpendiculars V1 and V2 drawn in the front view of the upper component 73. The perpendiculars V1 and V2 are phantom lines passing through transverse-directional outer edges of the opening 63. More specifically, the apertures 64 and 65 are disposed transverse-directionally apart from each other. The apertures 64 and 65 are also laterally symmetrically disposed. In a condition that the flasher unit 8 is attached to the upper component 73, the apertures 64 and 65 are entirely disposed between the first lens 44 and the second lens 48 (see Fig. 2). In other words, the apertures 64 and 65 are disposed above the coupling member 43. The aperture 64 is disposed lateral to the aforementioned first flasher bulb 50 whereas the aperture 65 is disposed lateral to the aforementioned second flasher bulb 54 (see Fig. 7).

Moreover, a center portion 61a of the front-side part 61 of the upper component 73, positioned above the opening 63, bulges further out than both the lateral portions 61b and 61c. A step 68 is formed between the center portion 61a and the lateral portion 61 b whereas a step 69 is formed between the center portion 61a and the lateral portion 61c. The pair of steps 68 and 69 protrudes upward. The steps 68 and 69 are disposed transverse-directionally apart from each other while disposed between the first lens 44 and the second lens 48 (see Figs. 2 and 3). Here, one of the steps 68 and 69, positioned on the left side, is referred to as a first step 68 whereas the other of the steps 68 and 69, positioned on the right side, is referred to as a second step 69. As illustrated in the front view of Fig. 8, the first and second steps 68 and 69 are formed in the range from the top of the upper component 73 to the upper rim of the opening 63. Additionally, the first and second steps 68 and 69 protrude further outward than the lenses of the flasher unit 8. Note the pair of the aforementioned apertures 64 and 65 is positioned between the first step 68 and the second step 69.

As illustrated in Fig. 10, the lower component 74 includes a surface 74a and the aforementioned inner fender 23. In the front view, the surface 74a is formed in a U-shape. The inner fender 23 is disposed rearward of the surface 74a. Note Fig. 10 is a front view of the lower component 74. A part of the upper component 73, positioned below the rim of the center part of the recess 75 (see a part positioned below the dashed-dotted line X1 in Fig. 8), and the lower component 74 form the aforementioned lower cover section 39.

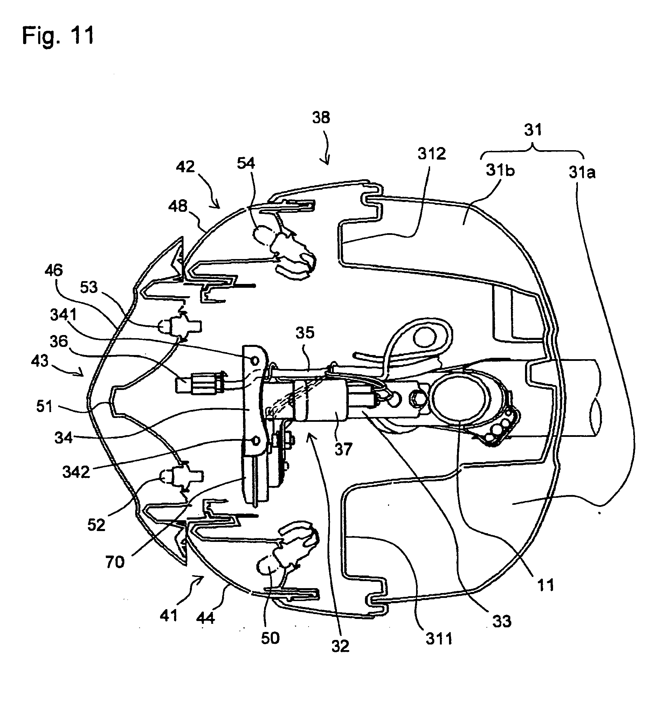

Additionally, as illustrated in Figs. 2 and 11, a horn 70 is accommodated in the interior of the upper cover section 38 of the front cover 21. As illustrated in Fig. 2, the horn 70 is opposed to the aperture 64. Moreover, the horn 70 is disposed above the coupling member 43. The horn 70 is positioned at approximately the same height as the first and second flashers 41 and 42. Note Fig. 11 is a cross-sectional view of the motorcycle 1 sectioned along a line X-X in Fig. 1. Figure 11 illustrates the inner structure of the upper cover section 38. An inner pocket 31 is disposed rearward of the upper cover section 38. The inner pocket 31 is composed of a first inner pocket 31 a and a second inner pocket 31 b. The first and second inner pockets 31a and 31b are disposed transverse-directionally apart from each other. The first inner pocket 31 a is positioned rearward of the first flasher 41 whereas the second inner pocket 31 b is positioned rearward of the second flasher 42. A front wall 311 of the first inner pocket 31 a and a front wall 312 of the second inner pocket 31 b bend in a forwardly convex shape, respectively.

Additionally, the head pipe 11 and a bracket 32 are disposed between the first inner pocket 31 a and the second inner pocket 31 b. The bracket 32 includes a support member 33 and an attachment member 34. As illustrated in Fig. 1, the support member 33 extends obliquely upward in the forward direction from the head pipe 11. The rear end of the support member 33 is fixed to the head pipe 11. On the other hand, the front end of the support member 33 is provided with the attachment member 34. The attachment member 34 is a plate-shaped member extending in the transverse direction. In the front view, the attachment member 34 is disposed above the coupling member 43 while disposed in a higher position than the first and second flashers 41 and 42. Moreover, as illustrated in Fig. 11, the attachment member 34 is positioned between the first flasher 41 and the second flasher 42 in the plan view. Bolt holes 341 and 342 are formed in the attachment member 34. The bolt holes 341 and 342 are used for fixing the front cover 21 to the main body frame 2.

Furthermore, a main harness 35 is disposed along the support member 33. The main harness 35 is connected to a power unit (not illustrated in the figure). A connector 36 is attached to the tip of the main harness 35. The connector 36 is connected to a coupler (not illustrated in the figure). The coupler is used for bundling electric lines extended from the first and second flash bulbs 50 and 54 and the positioning bulbs 52 and 53, respectively. A flasher relay 37 is disposed above the support member 33. The flasher relay 37 is connected to the main harness 35. The flasher relay 37 is configured to switch the light of the first and second flashers 41 and 42 on and off.

### 4. Advantageous Effects of the Embodiment

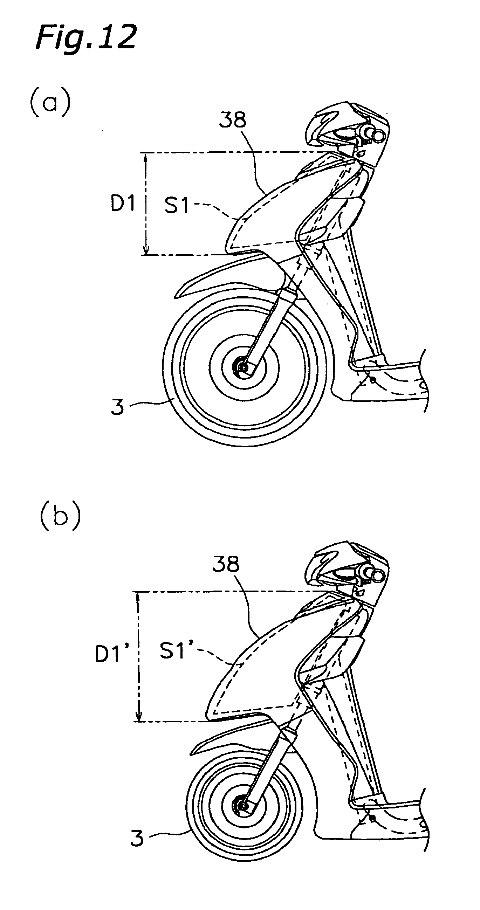

(1)
   According to the motorcycle 1 of the present embodiment, the first flasher 41 and the second flasher 42 are coupled by the coupling member 43 in the flasher unit 8. With the structure, it is possible to reduce the number of components for forming the flasher unit 8.
   As is the case with the motorcycle 1, on the other hand, when the outer wheel diameter of the front wheel 3 is large, comfortable ride is achieved on the rough road. However, a space for accommodating the internal components is limited in the interior of the upper cover section 38. In other words, a vertical dimension D1 of the upper cover section 38 (see Fig. 12(a)), when the outer wheel diameter of the front wheel 3 is large, is less than a vertical dimension D1' of the upper cover section 38, when the outer wheel diameter of the front wheel 3 is small (see Fig. 12(b)). Furthermore, an accommodation space S1 in the upper cover section 38, when the vertical dimension of the upper cover 38 is small, is less than an accommodation space S1' in the upper cover section 38, when the vertical dimension of the upper cover section 38 is large. Consequently, as is the case with the motorcycle 1 of the present embodiment, when the outer wheel diameter of the front wheel 3 is large, the space for accommodating the internal components is limited in the interior of the upper cover section 38.
   As is the case with the motorcycle 1, when the foot board 25 is formed in a flat shape, the structure allows a rider to comfortably ride on and off the motorcycle. However, the accommodation space is limited. When the transverse-directional center part of the foot board 25 largely bulges upward, on the other hand, the interior of the bulged part is usable as the accommodation space. In contrast, when the foot board 25 is formed in a flat shape, a space positioned below the foot board 25 is small. It is thus difficult to sufficiently keep an accommodation space.
   In response to this, according to the motorcycle 1 of the present embodiment, the headlamp 28 is disposed above the front cover 21 not in the upper cover section 38 of the front cover 21. Additionally, the coupling member 43 is provided with the positioning bulbs 52 and 53. The positioning bulbs 52 and 53 are smaller than the headlamp 28, and the space for accommodating the positioning bulbs 52 and 53 may be accordingly smaller than the space for accommodating the headlamp 28. Moreover, the coupling member 43 is not necessarily provided with a large reflector, such as the one provided in the headlamp 28. The rear side of the coupling member 43 is formed in a forwardly concave shape. With the structure, it is possible to sufficiently keep a space positioned rearward of the flasher unit 8 in the front cover 21. Consequently, it is possible to sufficiently keep an accommodation space in the inner pocket 31 and an accommodation space in the upper cover section 38 for accommodating the inner components.
(2)
   According to the motorcycle 1, in the front view, the vertical dimension H3 from each of the upper ends of the lenses 44 and 48 of the flashers 41 and 42 to the upper end of the transverse-directional center part of the coupling lens 46 is greater than the vertical dimension H4 of the transverse-directional center part of the coupling lens 46. Additionally, the vertical dimension H4 of the transverse-directional center part of the coupling lens 46 is less than the vertical dimension of the headlamp 28. With the structure, it is possible to sufficiently keep a larger space, positioned above the coupling member 43, in the upper cover section 38, compared to a conventional motorcycle in which the flashers 41 and 42 are connected to the headlamp 28.
(3)
   According to the motorcycle 1, in the front view, the vertical dimension H1 of the first and second flashers 41 and 42 is greater than the vertical dimension H2 of the coupling member 43. Additionally, in the top view, the longitudinal dimension L1 of the first and second flashers 41 and 42 is greater than the longitudinal dimension L2 of the coupling member 43. With the structure, it is possible to enhance visibility of the first and second flashers 41 and 42.
(4)
   According to the motorcycle 1, in the front view, the first and second flasher bulbs 50 and 54 are positioned above the upper rim 46a of the coupling member 43. With the structure, it is possible to enhance visibility of the first and second flasher bulbs 50 and 54.
(5)
   According to the motorcycle 1, the air vent port 47 is formed in the first flasher 41 whereas the air vent port 55 is formed in the second flasher 42. Therefore, it is possible to easily discharge the air in the interior of the first and second flashers 41 and 42 to the outside. Consequently, it is possible to inhibit fogging of the first and second lenses 44 and 48.
(6)
   According to the motorcycle 1, the flasher unit 8 has an integrated housing shared by the first flasher 41, the second flasher 42 and the coupling member 43. In this case, it is possible to enhance accuracy of attachment of the integrated housing to the upper cover section 38, compared to the case that housings of the first flasher 41, the second flasher 42 and the coupling member 43 are separately attached thereto.
(7)
   According to the motorcycle 1, the flasher unit 8 has the integrated lens shared by the first flasher 41, the second flasher 42 and the coupling member 43. Accordingly, the surface of the lens is continuously formed without any seams. With the structure, it is possible to reduce air resistance applied to the lens.
(8)
   According to the motorcycle 1, the first and second steps 68 and 69 protrude further outward than the lenses of the flasher unit 8. With the structure, it is possible to protect the lenses of the flasher unit 8.
(9)
   According to the motorcycle 1, the apertures 64 and 65 are formed in the upper cover section 38. Therefore, it is possible to easily transmit sound of the horn 70 to the outside. Furthermore, it is possible to enhance refrigeration effect of the flasher unit 8 in the interior of the upper cover section 38.
(10)
   According to the motorcycle 1, the front end of the coupling member 43 is positioned further forward than that of the upper cover section 38. With the structure, it is possible to sufficiently keep an interior space of the upper cover section 38.

### 5. Other Embodiments

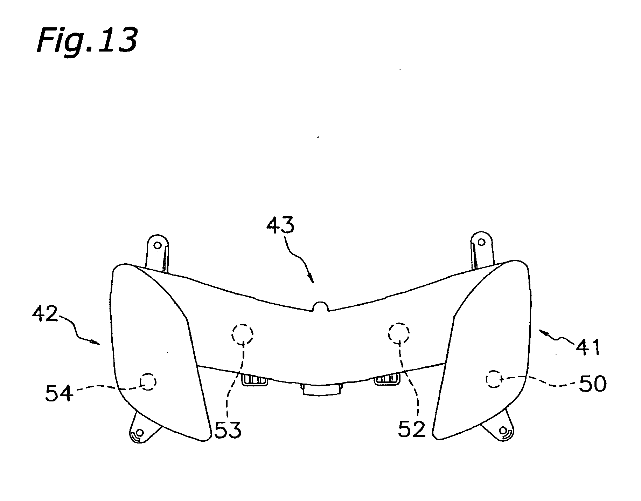

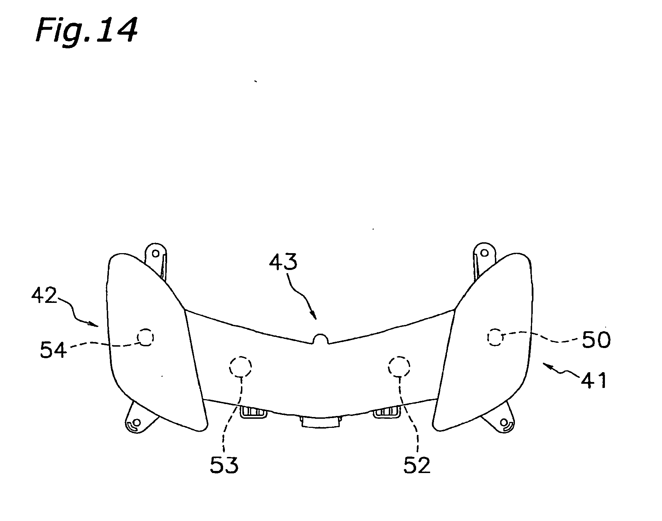

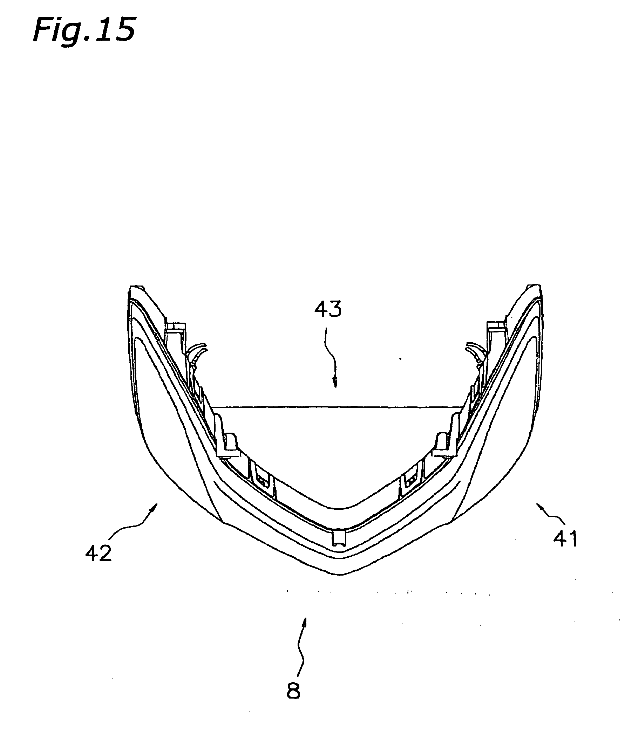

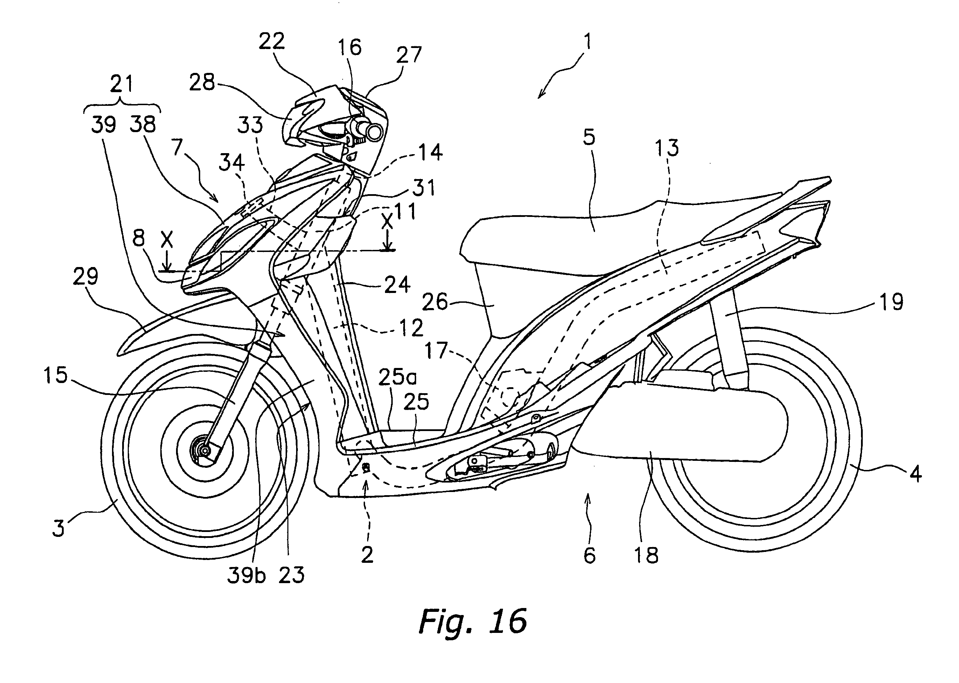

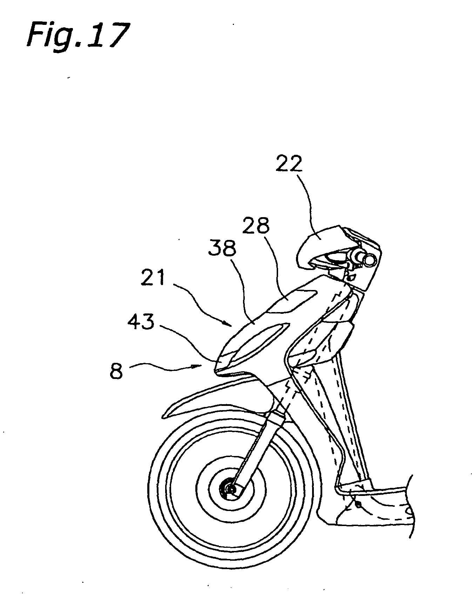

(a)
   In the motorcycle 1 according to the aforementioned embodiment, a front basket bag may be attached to the front cover 21.
(b)
   According to the aforementioned embodiment, in the front view, the vertical dimension H1 of the first and second flashers 41 and 42 is greater than the vertical dimension H2 of the coupling member 43. Additionally, in the top view, the longitudinal dimension L1 of the first and second flashers 41 and 42 is greater than the longitudinal dimension L2 of the coupling member 43. In the front view, however, the vertical dimension H1 of the first and second flashers 41 and 42 may be greater than the vertical dimension H2 of the coupling member 43, or, in the top view, the longitudinal dimension L1 of the first and second flashers 41 and 42 may be greater than the longitudinal dimension L2 of the coupling member 43.
(c)
   According to the aforementioned embodiment, the first and second flashers 41 and 42 protrude upward from the coupling member 43. However, the shape of the flasher unit 8 is not limited to this. As illustrated in Fig. 13, for instance, the first and second flashers 41 and 42 may protrude downward from the coupling member 43. Alternatively, as illustrated in Fig. 14, the first and second flashers 41 and 42 may protrude both upward and downward from the coupling member 43. When the first and second flashers 41 and 42 protrude downward, the apertures 64 and 65, formed in the front cover 21, may be positioned below the coupling member 43.
(d)
   According to the aforementioned embodiment, the first and second flasher bulbs 50 and 54 are positioned above the positioning bulbs 52 and 53. However, the first and second flasher bulbs 50 and 54 may be positioned below the positioning bulbs 52 and 53 depending on the shape of the flasher unit 8.
   Additionally, according to the aforementioned embodiment, the first and second flasher bulbs 50 and 54 are positioned further upward than the upper rim 46a of the coupling member 43. However, the first and second flasher bulbs 50 and 54 may be positioned further downward than a lower rim 46b (see Fig. 5) of the coupling member 43 depending on the shape of the flasher unit 8.
(e)
   According to the aforementioned embodiment, the coupling member 43 is provided with two positioning bulbs 52 and 53. However, the number of the positioning bulbs is not limited to two. For example, the coupling member 43 may be provided with only one positioning bulb. However, the coupling member 43 is desirably provided with two or more positioning bulbs in terms of enhancement of visibility.
(f)
   According to the aforementioned embodiment, the coupling member 43 is provided with the positioning bulbs 52 and 53 and the coupling lens 46. However, the structure of the coupling member 43 is not limited to this. For example, the coupling member 43 may not be provided with any positioning bulbs, and the front side of the coupling member 43 may be formed in a grid shape. Additionally, the front side of the coupling member 43 may be decorated (e.g., metal-coated).
   Alternatively, the coupling member 43 may be provided with a lens but not with the positioning bulbs 52 and 53.
(g)
   According to the aforementioned embodiment, the horn 70 is opposed to the aperture 64. However, the horn 70 may be opposed to the aperture 65. Also, a plurality of horns may be provided in opposed positions to the apertures 64 and 65. Alternatively, the horn 70 may be provided in the interior of the upper component 73 without being opposed to the apertures 64 and 65. However, the horn 70 is desirably opposed to at least either of the apertures 64 and 65 in terms of enhancement of transmission of horn sound to the outside.
(h)
   According to the aforementioned embodiment, the boundaries 66 and 67 may be formed by concave portions not by the convex portions. Alternatively, the first and second partition members 56 and 57 may be used, instead of the boundaries 66 and 67, as the bases of the boundaries. Furthermore, a phantom line, vertically extending while passing through the inflection point of the inner rim of the first flasher 41, may be used as the basis of the boundary. This is also true for the second flasher 42.
(i)
   According to the aforementioned embodiment, the first lens 44, the second lens 48 and the coupling lens 46 are integrally formed without any seams. However, these lenses may be separately formed and joined to each other. Note these lenses are desirably formed integrally without any seams in terms of reduction of air resistance.
   Moreover, according to the aforementioned embodiment, the first housing 45, the second housing 49 and the coupling housing 51 are integrally formed without any seams. However, these housings may be separately formed and may be joined to each other. Note these housings are desirably formed integrally without any seams in terms of enhancement of attachment accuracy.
(j)
   According to the aforementioned embodiment, the outer wheel diameter of the front wheel 3 is 0.356 m (14 inches). However, the diameter may be different from 0.356 m (14 inches). Note the diameter is desirably equal to or greater than 0.330 m (13 inches).
(k)
   According to the aforementioned embodiment, in the plan view, the rear side of the coupling member 43 is formed in a forwardly concave shape. As illustrated in Fig. 15, however, the rear side of the coupling member 43 may be formed in a linear shape. Note the rear side of the coupling member 43 is desirably formed in a forwardly concave shape in the plan view for the purpose of sufficiently keeping a space positioned rearward of the coupling member 43.
(l)
   The shape of the foot board 25 is not particularly limited as long as the foot board 25 is formed in an approximately flat shape. For example, the foot board 25 may bulge out unless it impairs comfortableness for a rider to ride on and off the motorcycle. As illustrated in Fig. 16, for instance, the foot board 25 may be provided with a bulge 25a having thickness of tens of millimeters or less.
(m)
   According to the aforementioned embodiment, the headlamp 28 is provided in the handle cover 22. However, the position of the headlamp 28 is not limited to this as long as the headlamp 28 is disposed at a different height from the coupling member 43. As illustrated in Fig. 17, for instance, the headlamp 28 may be provided in the upper cover section 38 of the front cover 21.

### Industrial Applicability

The present invention has working effects of reducing the number of components of a flasher unit and sufficiently keeping an accommodation space in a front cover, and is useful as a motorcycle.

### Explanation of the Reference Numerals

1: motorcycle, 5: seat, 8: flasher unit, 11: head pipe, 21: front cover, 25: foot board, 28: headlamp, 38: upper cover section, 39: lower cover section, 41: first flasher (flasher), 42: second flasher (flasher), 43: coupling member, 50: first flasher bulb (flasher bulb), 54: second flasher bulb (flasher bulb), 47, 55: air vent port, 52, 53: positioning bulb, 64, 65: aperture, 68: first step (step), 69: second step (step), 70: horn.

## Claims

1. A motorcycle, comprising:
a front wheel (3) and a rear wheel (4);
a front cover (21) including:
an upper cover section (38) positioned forward of a head pipe (11) and positioned above the front wheel (3); and
a lower cover section (39) extending downward from the upper cover section (38) and positioned rearward of the front wheel (3),
wherein a vertical dimension of the upper cover section (38) is less than a vertical dimension of the lower cover section (39) in a front view;
a flasher unit (8) attached to the upper cover section (38), the flasher unit including:
a pair of right and left flashers (41, 42); and
a coupling member (43) for coupling the flashers (41, 42), a rear side of the coupling member formed in a linear shape or a forwardly concave shape in a plan view; and
a headlamp (28) disposed at a different height from the coupling member (43),
wherein the upper cover section (38) has a front opening (63),
the flasher unit (8) is positioned in the front opening (63), and
the shape of the front opening (63) matches the shape of a lens (44) of the right flasher (41), a lens (48) of the left flasher (42) and a front surface (46) of the coupling member (43).

2. The motorcycle according to claim 1, further comprising:
a seat (5); and
a foot board (25) disposed forwardly below the seat (5) and formed in a transverse-directionally flat shape.

3. The motorcycle according to claim 1 or 2, wherein a vertical dimension (H3) from each of upper ends of the flashers (41, 42) to an upper end of a transverse-directionally center part of the coupling member (43) is greater than a vertical dimension (H4) of the transverse-directionally center part of the coupling member (43) in the front view.

4. The motorcycle according to claim 1 or 2, wherein a vertical dimension (H1) of each of the flashers (41, 42) is greater than a vertical dimension (H2) of the coupling member (43) in the front view.

5. The motorcycle according to any one of claims 1 to 4, wherein a longitudinal dimension (L1) of the flashers (41, 42) is greater than a longitudinal dimension (L2) of the coupling member (43) in a top view.

6. The motorcycle according to any one of claims 1 to 5, wherein the coupling member (43) is provided with a single or plurality of positioning bulbs (52, 53).

7. The motorcycle according to claim 6, wherein the number of the positioning bulbs (52, 53) is equal to or greater than two.

8. The motorcycle according to claim 6 or 7,
wherein each of the pair of the flashers (41, 42) is provided with a flasher bulb (50, 54), and
the flasher bulbs (50, 54) are disposed at different heights from the positioning bulb(s) (52, 53) in the front view.

9. The motorcycle according to claim 8, wherein the flasher bulbs (50, 54) are disposed above an upper rim (46a) of the coupling member (43) or below a lower rim (46b) of the coupling member (43).

10. The motorcycle according to any one of claims 1 to 9, wherein each of upper ends of the flashers (41, 42) is provided with an air vent port (47, 55).

11. The motorcycle according to any one of claims 1 to 10, wherein the pair of the flashers (41, 42) and the coupling member (43) have a shared integrated housing (45, 49, 51).

12. The motorcycle according to any one of claims 1 to 11, wherein the pair of the flashers (41, 42) and the coupling member (43) have a shared integrated lens (44, 46, 48).

13. The motorcycle according to any one of claims 1 to 12, wherein a step (68, 69) is formed on the upper cover section (38), the step (68, 69) positioned between the flashers (41, 42) and protruding further outward than the lenses (44, 48) of the flashers.

14. The motorcycle according to any one of claims 1 to 13, wherein an aperture (64, 65) is formed in the upper cover section (38), the aperture (64, 65) positioned above or below the coupling member (43).

15. The motorcycle according to claim 14, further comprising a horn (70) disposed in the interior of the upper cover section (38).

16. The motorcycle according to any one of claims 1 to 15, wherein a front end of the coupling member (43) is positioned further forward than a front end of the upper cover section (38).

## Patentansprüche

1. Motorrad, aufweisend:
ein Vorderrad (3) und ein Hinterrad (4);
eine vordere Abdeckung (21), enthaltend:
einen oberen Abdeckabschnitt (38), positioniert vor einem Kopfrohr (11) und positioniert oberhalb des Vorderrades (3); und
einen unteren Abdeckabschnitt (39), der sich nach unten von dem oberen Abdeckabschnitt (38) erstreckt und hinter dem Vorderrad (3) positioniert ist,
wobei eine vertikale Abmessung des oberen Abdeckabschnittes (38) kleiner als eine vertikale Abmessung des unteren Abdeckabschnittes (39) in einer Vordersicht ist;
eine Blinkereinheit (8), verbunden mit dem oberen Abdeckabschnitt (38), wobei die Blinkereinheit (8) enthält:
ein Paar von rechten und linken Blinkern (41, 42); und
ein Kuppelteil (43) zum Kuppeln der Blinker (41, 42), wobei eine Rückseite des Kuppelteils in einer linearen Form oder einer konkaven Form nach vorn in einer Draufsicht gebildet ist; und
einen Scheinwerfer (28), angeordnet in einer von dem Kuppelteil (43) abweichenden Höhe,
wobei der obere Abdeckabschnitt (38) eine vordere Öffnung (63) hat,
die Blinkereinheit (8) in der vorderen Öffnung (63) positioniert ist, und
die Form der vorderen Öffnung (63) mit der Form einer Linse (44) des rechten Blinkers (41), einer Linse (48) des linken Blinkers (42) und einer vorderen Oberfläche (46) des Kuppelteils (43) übereinstimmt.

2. Motorrad nach Anspruch 1, außerdem aufweisend:
einen Sitz (5); und
ein vorderes Trittbrett (25), angeordnet nach vorn unter dem Sitz (5) und in Querrichtung flachen Form.

3. Motorrad nach Anspruch 1 oder 2, wobei eine vertikale Abmessung (H3) von jedem der oberen Enden der Blinker (41, 42) zu einem oberen Ende eines quer- gerichteten Mittelteils des Kuppelteils (43) größer als eine vertikale Abmessung (H4) des quergerichteten Mittelteils des Kuppelteils (43) in der Vorderansicht ist.

4. Motorrad nach Anspruch 1 oder 2, wobei eine vertikale Abmessung (H1) von jedem der Blinker (41, 42) größer als eine vertikale Abmessung (H2) des Kuppelteils (43) in der Vorderansicht ist.

5. Motorrad nach einem der Ansprüche 1 bis 4, wobei eine Längsabmessung (L1) der Blinker (41, 42) größer als eine Längsabmessung (L2) des Kuppelteils (43) in einer Draufsicht ist.

6. Motorrad nach einem der Ansprüche 1 bis 5, wobei das Kuppelteil (43) mit einer einzelnen oder Mehrzahl von Positionsleuchten (52, 53) versehen ist.

7. Motorrad nach Anspruch 6, wobei die Anzahl der Positionsleuchten (52, 53) gleich zu oder größer als zwei ist.

8. Motorrad nach Anspruch 6 oder 7,
wobei jedes Paar der Blinker (41, 42) mit einer Blinkerleuchte (50, 54) versehen ist, und
die Blinkerleuchten (50, 54) in verschiedenen Höhen von den Positionsleuchten (52, 53) in der Vordersicht angeordnet sind.

9. Motorrad nach Anspruch 8, wobei die Blinkerleuchten (50, 54) oberhalb eines oberen Randes (46a) des Kuppelteils (43) oder unter einem unteren Rand (46b) des Kuppelteils (43) angeordnet sind.

10. Motorrad nach einem der Ansprüche 1 bis 9, wobei jedes der oberen Enden der Blinker (41, 42) mit einer Luftentlüftungsöffnung (47, 55) versehen ist.

11. Motorrad nach einem der Ansprüche 1 bis 10, wobei das Paar der Blinker (41, 42) und das Kuppelteil (43) ein integrales Gehäuse (45, 49, 51) teilen.

12. Motorrad nach einem der Ansprüche 1 bis 11, wobei das Paar der Blinker (41, 42) und das Kuppelteil (43) eine geteilte einheitliche Linse (44, 46, 48) haben.

13. Motorrad nach einem der Ansprüche 1 bis 12, wobei eine Stufe (68, 69) auf dem oberen Abdeckabschnitt (38) gebildet ist, wobei die Stufe (68, 69) zwischen den Blinkern (41, 42) positioniert ist und weiter nach vorn als die Linsen (44, 48) der Blinker vorspringen.

14. Motorrad nach einem der Ansprüche 1 bis 13, wobei eine Öffnung (64, 65) in dem oberen Abdeckabschnitt (38) gebildet ist, wobei die Öffnung (64, 65) über oder unter dem Kuppelteil (43) positioniert ist.

15. Motorrad nach Anspruch 14, außerdem aufweisend eine Hupe (70), angeordnet in dem Inneren des oberen Abdeckabschnittes (38).

16. Motorrad nach einem der Ansprüche 1 bis 15, wobei ein vorderes Ende des Kuppelteils (43) weiter nach außen als ein vorderes Ende des oberen Abdeckabschnittes (38) positioniert ist.

## Revendications

1. Motocycle comprenant :
une roue avant (3) et une roue arrière (4) ;
un habillage avant (21) comportant :
une section d'habillage supérieure (38) qui est placée à l'avant d'un tube supérieur (11) et au-dessus de la roue avant (3) ; et
une section d'habillage inférieure (39) qui s'étend vers le bas à partir de la section d'habillage supérieure (38) et qui est placée à l'arrière de la roue avant (3),
étant précisé qu'une dimension verticale de la section d'habillage supérieure (38) est moins grande qu'une dimension verticale de la section d'habillage inférieure (39), vue de face ;
une unité de clignotants (8) fixée à la section d'habillage supérieure (38), l'unité de clignotants comportant :
une paire de clignotants droit et gauche (41, 42) ; et
un élément de couplage (43) pour coupler les clignotants (41, 42), un côté arrière de l'élément de couplage ayant une forme linéaire ou une forme concave vers l'avant, vu en plan ; et
un feu avant (28) qui est disposé à une hauteur différente par rapport à l'élément de couplage (43),
étant précisé que la section d'habillage supérieure (38) a une ouverture avant (63),
que l'unité de clignotants (8) est placée dans l'ouverture avant (63), et
que la forme de l'ouverture avant (63) correspond à la forme d'une lentille (44) du clignotant droit (41), d'une lentille (48) du clignotant gauche (42) et d'une surface avant (46) de l'élément de couplage (43).

2. Motocycle selon la revendication 1, comprenant par ailleurs :
un siège (5) ; et
un repose-pieds (25) qui est disposé à l'avant, sous le siège (5), et qui a une forme plate dans le sens transversal.

3. Motocycle selon la revendication 1 ou 2, dans lequel une dimension verticale (H3) entre chacune des extrémités supérieures de clignotants (41, 42) et une extrémité supérieure d'une partie centrale, dans le sens transversale, de l'élément de couplage (43), est plus grande qu'une dimension verticale (H4) de la partie centrale, dans le sens transversal, de l'élément de couplage (43) vu de face.

4. Motocycle selon la revendication 1 ou 2, dans lequel une dimension verticale (H1) de chacun des clignotants (41, 42) est plus grande qu'une dimension verticale (H2) de l'élément de couplage (43) vu de face.

5. Motocycle selon l'une quelconque des revendications 1 à 4, dans lequel une dimension longitudinale (L1) des clignotants (41, 42) est plus grande qu'une dimension longitudinale (L2) de l'élément de couplage (43) vu en plan.

6. Motocycle selon l'une quelconque des revendications 1 à 5, dans lequel l'élément de couplage (43) est pourvu d'une ou plusieurs ampoules de position (52, 53).

7. Motocycle selon la revendication 6, dans lequel le nombre d'ampoules de position (52, 53) est égal ou supérieur à deux.

8. Motocycle selon la revendication 6 ou 7, dans lequel chacun des deux clignotants (41, 42) est pourvu d'une ampoule de clignotant (50, 54),
et les ampoules de clignotants (50, 54) sont disposées à des hauteurs différentes des ampoules de position (52, 53), vues de face.

9. Motocycle selon la revendication 8, dans lequel les ampoules de position (50, 54) sont disposées au-dessus d'un bord supérieur (46a) de l'élément de couplage (43) ou au-dessous d'un bord inférieur (46b) de l'élément de couplage (43).

10. Motocycle selon l'une quelconque des revendications 1 à 9, dans lequel chacune des extrémités supérieures des clignotants (41, 42) est pourvue d'un orifice d'aération (47, 55).

11. Motocycle selon l'une quelconque des revendications 1 à 10, dans lequel la paire de clignotants (41, 42) et l'élément de couplage (43) ont un carter commun d'une seule pièce (45, 49, 51).

12. Motocycle selon l'une quelconque des revendications 1 à 11, dans lequel la paire de clignotants (41, 42) et l'élément de couplage (43) ont une lentille commune d'une seule pièce (44, 46, 48).

13. Motocycle selon l'une quelconque des revendications 1 à 12, dans lequel un épaulement (68, 69) est formé sur la section d'habillage supérieure (38), l'épaulement (68, 69) étant placé entre les clignotants (41, 42) et dépassant davantage, vers l'extérieur, que les lentilles (44, 48) des clignotants.

14. Motocycle selon l'une quelconque des revendications 1 à 13, dans lequel une ouverture (64, 65) est formée dans la section d'habillage supérieure (38), l'ouverture (64, 65) étant placée au-dessus ou au-dessous de l'élément de couplage (43).

15. Motocycle selon la revendication 14, comprenant par ailleurs un avertisseur (70) disposé à l'intérieur de la section d'habillage supérieure (38).

16. Motocycle selon l'une quelconque des revendications 1 à 15, dans lequel une extrémité avant de l'élément de couplage (43) est placée plus vers l'avant qu'une extrémité avant de la section d'habillage supérieure (38).
